# FASCICULE DE BREVET EUROPEEN

(11) **EP 2 460 724 B1**
(45) Date de publication et mention de la délivrance du brevet: **10.03.2021**
(21) Numéro de dépôt: 11190848.9
(22) Date de dépôt: 25.11.2011
(51) Int. Cl.: B64C 25/44, H02P 6/08, B60T 13/74, F16D 55/36, F16D 66/00, F16D 121/24, H02P 23/18

(54) **Procédé de commande d'un moteur à courant continu sans balai.**
Steuerverfahren eines bürstenlosen Gleichstrommotors
Method for controlling a brushless DC motor.

(30) Priorité: 06.12.2010 FR 1060095
(43) Date de publication de la demande: 06.06.2012
(73) Titulaire: Safran Landing Systems, 78140 Vélizy-Villacoublay (FR)
(72) Inventeur: Farid, Anas, 92100 Boulogne-Billancourt (FR); Annee, Etienne, 92400 Courbevoie (FR)
(74) Mandataire: Lavialle, Bruno François Stéphane

(56) Documents cités:
- EP-A1- 0 114 276
- EP-A2- 1 300 936
- FR-A1- 2 738 419
- US-A- 3 977 631
- US-A- 6 030 054
- US-A1- 2010 127 647

## Description

L'invention est relative à un procédé de commande d'un moteur à courant continu sans balais ou brushless.

### ARRIERE-PLAN TECHNOLOGIQUE DE L'INVENTION

Ces moteurs sont en général commandés au moyen d'un convertisseur statique, qui, à partir d'une source de tension continue, délivre au moteur des tensions pour chaque phase du moteur, au moyen par exemple de transistors de puissance qui sont commandés pour s'ouvrir et se fermer à un rythme asservi à la position angulaire du rotor du moteur. A cet effet, le moteur est en général équipé de moyens de mesure de la position angulaire du moteur qui délivrent un signal représentatif de cette position, le signal étant exploité par le convertisseur statique pour commander l'ouverture et la fermeture des transistors de puissance et ainsi réaliser la fonction d'autopilotage, qui est réalisée par le collecteur dans le cas des moteurs à balais.

Il convient par ailleurs d'adapter la tension délivrée au niveau de couple ou de puissance requis. A cet effet, le convertisseur statique est généralement commandé pour calibrer la tension délivrée au moteur en fonction de la puissance mécanique ou du couple que celui-ci est censé délivrer. Ainsi, en réponse à une consigne de couple ou de puissance, le convertisseur statique envoie au moteur des tensions calibrées qui permettent au moteur de développer le couple ou la puissance demandés. A cet effet, divers procédés de calibration de tension sont connus, comme par exemple la modulation de largeur d'impulsion (MLI ou PWM en anglais pour pulse width modulation).

On connaît par ailleurs des architectures de pilotage comportant un contacteur statique associé à un capteur de position angulaire pour le pilotage des transistors de puissance, le contacteur statique n'assurant pas comme les convertisseurs statiques la fonction de calibration de la tension, mais uniquement la fonction d'autopilotage. La calibration de la tension est assurée par un convertisseur DC/DC amont qui délivre au contacteur statique une tension continue calibrée.

Le document US 6 030 054 A divulgue un actionneur électromécanique de freinage connu, qui comprend un moteur à courant continu sans balais.

### OBJET DE L'INVENTION

L'invention a pour objet de proposer une autre façon d'alimenter un moteur à courant continu sans balais.

### PRESENTATION DE L'INVENTION

A cet effet, on propose un actionneur électromécanique intégré de freinage selon la revendication 1.

Les dispositions de l'invention présentent de nombreux avantages :
- le contacteur statique associé au moteur est très simple, puisqu'il n'assure que le séquençage des tensions de phase, et non leur calibration. Il peut être disposé au plus près du moteur, voire être englobé directement dans celui-ci, en intégrant un capteur de position angulaire du rotor dont le signal est directement exploité par le contacteur statique. En quelque sorte, le contacteur statique remplace le collecteur et les balais des moteurs à balais ;
- le générateur de la tension d'entrée peut également être très simple, puisqu'il délivre une tension monophasée de fréquence fixe. Seul le rapport cyclique des impulsions est variable, ce qui est technologiquement très simple à réaliser ;
- le contacteur statique et le générateur de la tension pulsée peuvent être physiquement éloignés l'un de l'autre, en étant reliés par des moyens aptes à transmettre la tension pulsée de fréquence fixe. En particulier, on peut transmettre cette tension pulsée par un transformateur, réalisant ainsi une isolation galvanique

### DESCRIPTION DES FIGURES

L'invention sera mieux comprise à la lumière de la description qui suit d'un mode particulier de réalisation de l'invention, en référence aux figures annexées parmi lesquelles
- la figure 1 est une vue schématique d'un dispositif permettant la mise en œuvre du procédé de l'invention ;
- la figure 2 est une vue schématique d'un dispositif analogue à celui de la figure 1 pour l'alimentation de plusieurs moteurs ;
- la figure 3 est une vue en coupe de la partie basse d'un atterrisseur d'aéronef à freins électromécaniques mettant en œuvre le procédé de l'invention.

### DESCRIPTION DETAILLEE DE L'INVENTION

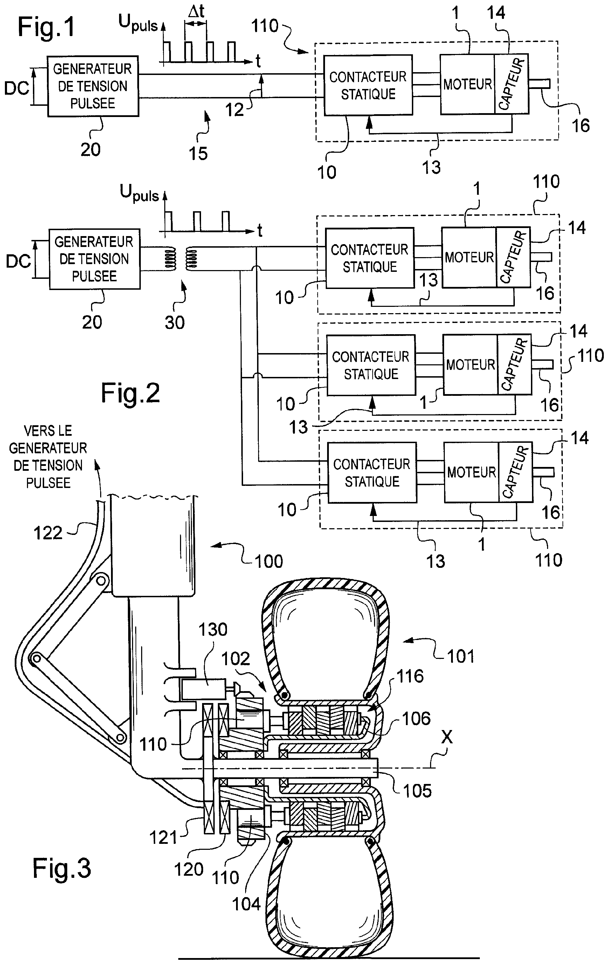

En référence à la figure 1, le procédé est utilisé pour alimenter un moteur électrique 1 du type à courant continu sans balais. Selon l'invention, le moteur 1 est associé à un contacteur statique 10 comportant des interrupteurs commandables qui découpent une tension d'entrée 12 pour délivrer à des phases du moteur 1 en fonction d'une information 13 de position angulaire du moteur délivrée par un capteur de position angulaire 14. La seule fonction du contacteur statique 10 est de découper la tension d'entrée pour générer des tensions de phase. Les interrupteurs commandables sont par exemple des thyristors.

Toujours selon l'invention, la tension d'entrée 12 est une tension pulsée Upuls qui est générée par un générateur de tension pulsée 20 à partir d'une source de tension continue DC. Le générateur de tension pulsée 20 est de préférence un hacheur comportant des interrupteurs commandés et qui, à partir de la source de tension continue, élabore une tension monophasée pulsée de fréquence fixe (sur le diagramme de la figure est représentée la période équivalente Δt de durée constante) mais de rapport cyclique commandable afin de produire une tension pulsée de valeur moyenne commandable, par exemple en fonction d'une consigne d'effort fournie au générateur d'impulsion 20.

Le cas échéant, on pourra prévoir à l'entrée du contacteur statique 10 un étage de filtrage pour lisser la tension d'entrée avant qu'elle n'attaque les interrupteurs commandés du contacteur statique.

De préférence, le contacteur statique 10 et le capteur 14 sont disposés à proximité immédiate du moteur, voire intégrés à ce dernier. L'ensemble ainsi constitué, représenté symboliquement sur la figure par le rectangle en pointillés, ne comporte que deux fils d'entrée pour son alimentation au moyen de la tension d'entrée pulsée.

La tension pulsée peut être transmise du générateur de tension pulsée 20 au contacteur statique 10 au moyen de câbles 15, comme représenté ici. Elle peut encore être transmise, comme illustré à la figure 2, au moyen d'un transformateur monophasé 30 assurant une isolation galvanique entre ces deux éléments. Compte tenu de la fréquence de la tension d'entrée 12 (typiquement de l'ordre de 100KHz), le transformateur peut être très compact.

Comme cela est illustré à la figure 2, la tension pulsée peut être facilement transmise à plusieurs ensembles moteur/contacteur statique/capteur de position angulaire au moyen du transformateur.

L'invention est particulièrement adaptée à une application en matière de freins électromécaniques d'aéronefs. En effet, ainsi que cela a été suggéré dans le document US 3 977 631, il est intéressant de prévoir sur une atterrisseur un frein dont la couronne, c'est-à-dire la pièce qui supporte les actionneurs, et le tube de torsion associés soient montés sur l'essieu correspondant avec une possibilité de rotation. Cette disposition permet, en commandant les actionneurs de freinage de façon à serrer la pile de disques et ainsi solidariser en rotation la couronne avec la roue, de provoquer la rotation commandée de la roue en faisant tourner la couronne à l'aide d'un organe moteur.

Dans le document précité, les actionneurs sont des actionneurs hydrauliques. Leur alimentation alors que la couronne tourne nécessite de prévoir un circuit hydraulique pourvu d'un raccord tournant compatible avec la rotation de la couronne.

Comme illustré à la figure 3, cet enseignement peut être appliqué à un atterrisseur 100 portant des roues 101 dont les freins 102 sont équipés d'actionneurs électromécaniques de freinage 110 portés par une couronne 104. La couronne 104 est ici montée à rotation sur l'essieu 105 qui reçoit la roue 101. Chacun des actionneurs 110 est équipé d'un moteur à courant continu sans balai associé selon l'invention à un contacteur statique et un capteur de position angulaire, ces deux éléments étant disposés directement dans l'actionneur. Le moteur sert à déplacer sélectivement un poussoir de l'actionneur en regard d'une pile de disques de friction 116 pour sélectivement presser les disques entre eux, au moyen d'un organe de transformation transformant le mouvement de rotation du moteur en un mouvement de déplacement linéaire du poussoir. L'ensemble forme un actionneur intégré démontable en bloc de la couronne 104.

La couronne 104 est solidaire d'un tube de torsion 106 qui tourne avec la couronne 104. Les disques de friction 116 comportent des disques solidaires en rotation de la roue 101 en alternance avec des disques solidaires en rotation du tube de torsion 106.

Selon une disposition particulière de l'invention, la couronne 104 porte le secondaire 120 d'un transformateur dont le primaire 121 est fixé sur l'atterrisseur en regard du secondaire. Le primaire 121 est relié au moyen d'un câble 122 descendant le long de l'atterrisseur à un générateur de tension pulsée monté ici dans le fuselage de l'aéronef. Le transformateur transmet cette tension pulsée aux actionneurs intégrés 110. Comme auparavant, cette tension pulsée est découpée et séquencée par les contacteurs statiques des actionneurs pour alimenter les phases des moteurs associés en fonction de la position angulaire du rotor du moteur.

Grâce à cette liaison galvanique sans contact, les actionneurs intégrés 110 peuvent être alimentés alors que la couronne est en train de tourner, sans nécessiter de contacts tournants.

Pour commander sélectivement la rotation de la couronne 104, un moteur 130 d'entraînement en rotation de la couronne 104 est disposé sur la partie basse de l'atterrisseur et coopère ici avec la couronne par l'intermédiaire d'une liaison à pignons coniques.

Ces dispositions permettent plusieurs modes de fonctionnement :
- un premier mode de fonctionnement lors duquel la couronne 104 est bloquée en rotation, les actionneurs intégrés 110 étant alors alimentés par le transformateur dont le primaire 121 et le secondaire 120 sont immobiles l'un par rapport à l'autre, pour presser les disques du frein entre eux et ainsi ralentir la rotation de la roue. C'est le mode de freinage classique.
- un deuxième mode de fonctionnement lors duquel la couronne 104 est entraînée en rotation par le moteur 130. Pour entraîner la roue en rotation, il convient alors d'alimenter les actionneurs intégrés 110 par le transformateur dont le secondaire 120 tourne en regard du primaire 121. C'est le mode de déplacement autonome, lors duquel l'aéronef peut être déplacé sans l'aide de ses propulseurs.
- un troisième mode de fonctionnement lors duquel la couronne 104 est entraînée en rotation par le moteur 130, sans que les actionneurs intégrés 110 ne soient alimentés. C'est un mode de vérification du bon fonctionnement de l'organe moteur.

L'invention n'est pas limitée à ce qui vient d'être décrit, mais englobe au contraire toute variante entrant dans le cadre défini par les revendications.

## Revendications

1. Actionneur électromécanique (110) intégré de freinage comportant :
- un moteur électrique (1) à courant continu sans balais ;
- un poussoir déplaçable linéairement et mécaniquement relié au moteur pour se déplacer en réponse à une rotation du moteur ;
l'actionneur électromécanique étant **caractérisé en ce qu'**il comporte en outre :
- un contacteur statique (10) pour fournir une tension polyphasée au moteur en découpant et séquençant une tension d'entrée pulsée en fonction d'une information de position angulaire d'un rotor du moteur ;
- un capteur de position angulaire (14) du rotor délivrant la dite information.

2. Atterrisseur d'aéronef comportant au moins un essieu (109) recevant au moins une roue (101) équipée d'un frein électromécanique (102), le frein comportant au moins un actionneur de freinage selon la revendication 1.

3. Atterrisseur d'aéronef selon la revendication 2, dans lequel le frein comporte une couronne (104) recevant le ou les actionneurs de freinage (110) et qui est montée à rotation sur l'essieu, la couronne portant le secondaire (121) d'un transformateur dont le primaire (122) est porté par l'atterrisseur en regard du secondaire, le transformateur étant agencé pour transmettre la tension pulsée vers le ou les actionneurs qui sont électriquement reliés au secondaire du transformateur.

4. Atterrisseur selon la revendication 2, dans lequel le frein comporte une couronne recevant le ou les actionneurs de freinage et qui est montée à rotation sur l'essieu, la couronne étant commandée sélectivement en rotation au moyen d'un moteur électrique (130) disposé sur l'atterrisseur.

## Patentansprüche

1. Integrierter elektromechanischer Bremsaktor (110), umfassend:
- einen bürstenlosen Gleichstrom-Elektromotor (1);
- einen linear verschiebbaren Stößel, der mechanisch mit dem Motor verbunden ist, um sich in Antwort auf eine Drehung des Motors zu verschieben;
wobei der elektromechanische Aktor **dadurch gekennzeichnet ist, dass** er ferner umfasst:
- ein statisches Schütz (10), um dem Motor eine mehrphasige Spannung zu liefern, indem eine gepulste Eingangsspannung in Abhängigkeit von einer Winkelpositionsinformation des Rotors des Motors unterbrochen und sequenziert wird;
- einen Winkelpositionssensor (14) zum Erfassen der Winkelposition des Rotors, der die genannte Information liefert.

2. Luftfahrzeugfahrwerk, umfassend mindestens eine Achse (109), die mindestens ein Rad (101) aufnimmt, das mit einer elektromechanischen Bremse (102) ausgestattet ist, wobei die Bremse mindestens einen Bremsaktor nach Anspruch 1 umfasst.

3. Luftfahrzeugfahrwerk nach Anspruch 2, bei dem die Bremse einen Kranz (104) umfasst, der den oder die Bremsaktoren (110) aufnimmt und der drehbar auf der Achse gelagert ist, wobei der Kranz die Sekundärwicklung (121) eines Transformators trägt, dessen Primärwicklung (122) von dem Fahrwerk gegenüber der Sekundärwicklung getragen wird, wobei der Transformator ausgebildet ist, um die gepulste Spannung zu dem oder den Aktoren zu übertragen, die elektrisch mit der Sekundärwicklung des Transformators verbunden sind.

4. Fahrwerk nach Anspruch 2, bei dem die Bremse einen Kranz umfasst, der den oder die Bremsaktoren aufnimmt und der drehbar auf der Achse gelagert ist, wobei der Kranz mittels eines Elektromors (130), der an dem Fahrwerk angeordnet ist, selektiv in Rotation gesteuert wird.

## Claims

1. An integrated electromechanical brake actuator (110) comprising:
· a brushless DC electric motor (1);
· a linearly-movable pusher mechanically connected to the motor to move in response to rotation of the motor;
the electromechanical brake actuator being **characterized in that** it further comprises :
· a static contactor (10) for delivering a polyphase voltage to the motor by interrupting and sequencing input voltage pulses as a function of information relating to the angular position of the rotor of the motor; and
· an angle position sensor (14) for sensing the angular position of the rotor and delivering said information.

2. An aircraft undercarriage including at least one axle (109) receiving at least one wheel (110) fitted with an electromechanical brake (102), the brake including at least one brake actuator according to claim 1.

3. An aircraft undercarriage according to claim 2, wherein the brake includes a ring (104) receiving the brake actuator(s) (110) and mounted to rotate on the axle, the ring carrying the secondary (121) of a transformer having its primary (122) carried by the undercarriage in register with the secondary, the transformer being arranged to transmit the voltage pulses to the actuator(s) that are electrically connected to the secondary of the transformer.

4. An undercarriage according to claim 2, wherein the brake includes a ring that receives the brake actuator(s) and that is mounted to rotate on the axle, rotation of the ring being controlled in selective manner by means of an electric motor (130) arranged on the undercarriage.
